# EUROPEAN PATENT SPECIFICATION

(11) **EP 3 119 573 B1**
(45) Date of publication and mention of the grant of the patent: **28.06.2023**
(21) Application number: 15717204.0
(22) Date of filing: 19.03.2015
(51) Int. Cl.: B28B 19/00

(54) **A METHOD OF FORMING CONCRETE**
VERFAHREN ZUR HERSTELLUNG VON BETON
PROCÉDÉ DE PRÉPARATION DE BÉTON

(30) Priority: 21.03.2014 GB 201405065
(43) Date of publication of application: 25.01.2017
(73) Proprietor: Bacement Limited, Burton Joyce, Nottingham NG14 5FS (GB)
(72) Inventor: HARPER, Ian Peter, Burton Joyce Nottingham NG14 5FS (GB); LISTER, Paul Roy, Gedling Nottingham NG4 2QS (GB); WHEAT, Michael Ian, Burton Joyce Nottingham NG14 5AE (GB)
(74) Representative: Potter Clarkson
(86) International application number: PCT/GB2015/050812
(87) International publication number: WO 2015/140561

(56) References cited:
- DE-U- 1 989 376
- FR-A- 776 610
- FR-A1- 2 680 130

## Description

This invention relates to a method of forming porous concrete.

It is known to use concrete to build pavements, roads and parts of houses, amongst other structures.

DE1989376 discloses a method wherein coarse-grained aggregates are applied to the bottom of a mould. When such coarse-grained aggregates are applied, gaps between the aggregate particles are formed automatically. Subsequently, a porous concrete mass is poured into the mould, whereby the gaps are filled by the same. This is followed in the usual way by pre-curing the concrete and hardening it in a steam-heated autoclave and it discloses a composite building panel with an outer protective layer made of stone.

FR2680130 discloses a method of employing a hydraulic binder by the mixing and/or reaction of at least two of its constituents or reactants. The mixture and/or the reaction is produced near the site of application of the said binder, using at least two separate liquid solutions and/or suspensions of the said constituents, a first solution and/or suspension including an active inorganic compound of the said binder combined with a retarding agent, and a second solution and/or suspension including an agent for accelerating the curing (hardening) of the said binder.

FR776610 discloses a method of producing paving stones and pavement slabs with an outer layer made of stone.

According to the invention there is provided a method of forming porous concrete, the method comprising the steps of:
i) providing cement;
ii) providing water;
iii) mixing the cement and the water to form a cement-based mixture free of aggregate;
iv) after forming the cement-based mixture, applying the cement-based mixture to an aggregate laid on a surface to form the porous concrete,

wherein the aggregate includes aggregate particles, and
wherein the cement-based mixture has a surface tension coefficient that permits suspension of the cement-based mixture on, around, through and/or over the aggregate to form the porous concrete by interacting with the aggregate particles to form nonporous concrete portions and by passing through gaps between the aggregate particles to form porous portions.

It will be understood that an aggregate is a material or structure formed from a mass of fragments or particles loosely compacted together. More particularly, an aggregate used to form cement can be a fine aggregate, which includes particles such as sand, or can be a coarse aggregate, which includes larger particles such as crushed stone.

It will also be understood that concrete can be formed by using a combination of both fine and coarse aggregate so as to control certain characteristics, such as porosity, of the resultant concrete.

After the cement-based mixture is applied to the aggregate laid on the surface to form the porous concrete, the concrete begins to cure and harden on the surface. Since formation of the concrete using the method according to the invention means that the cement-based mixture does not come into contact with any aggregate (i.e. the cement-based mixture at this stage is free of any aggregate) before it is applied to the aggregate laid on the surface, the method according to the invention provides greater control over the formation of the concrete to take place at a particular time and/or on a particular surface, thus providing flexibility when it comes to forming the concrete.

In contrast, if the cement, water and the aggregate are mixed to form concrete before the concrete is applied to the surface, there would be a short time limit in which the concrete would need to be applied to the surface before the concrete cures and hardens to become unworkable such that it is no longer possible to apply it to the surface. As such, mixing the cement, water and the aggregate to form concrete before applying the concrete to the surface may be restrictive when it comes to controlling the formation of the concrete to take place at a particular time and/or on a particular surface.

The method according to the invention also permits the application of the cement-based mixture to the aggregate laid on the surface to be subject to interruption, which may arise due to adverse weather conditions or workforce availability for example, while incurring minimal wastage. This is because, since the aggregate laid on the surface is kept separate from the cement-based mixture until the cement-based mixture is applied to the aggregate to form the concrete, the aggregate remains reusable in the event of a prolonged interruption to the application of the cement-based mixture to the aggregate laid on the surface.

Moreover, although the cement-based mixture hardens over time to form grout, the cement-based mixture can still be used for a certain period of time, e.g. up to twenty minutes, after it has been formed. Therefore, short interruptions to the application of the cement-based mixture to the aggregate laid on the surface results in zero or minimal wastage of the cement-based mixture and the aggregate.

In contrast, mixing the cement, water and the aggregate to form concrete before applying the concrete to the surface results in great difficulty in reusing any unused concrete at a later stage, since the concrete immediately begins to cure and harden upon its formation and rapidly becomes unworkable. Therefore, any interruption to the application of the concrete to the surface will result in wastage of the unused concrete (i.e. wastage of the cement, water and aggregate), thereby increasing the cost of the formation of the concrete on the surface.

Hence, the method according to the invention advantageously reduces the amount of wastage and increased cost that would have otherwise resulted from mixing the cement, water and the aggregate to form concrete before applying the concrete to the surface.

In addition to the foregoing, the method according to the invention permits positioning of the aggregate on the surface in any manner as desired so as to control the size and/or shape of the resultant concrete. The aggregate can also be chosen to provide different properties of the resultant concrete.

The method according to the invention also not only obviates the high costs associated with transporting concrete from a concrete plant to a given location, but also minimises the high labour costs associated with handling the concrete and laying it onto a surface.

Porous concrete allows liquids, such as water, to pass directly therethrough. As such porous concrete reduces surface runoff and permits groundwater recharge. In this way porous concrete can be used to alleviate flooding.

The provision of a cement-based mixture with such a surface tension coefficient allows the cement-based mixture to spread evenly on, around, through and/or over the aggregate, thus resulting in evenly formed concrete. The surface tension coefficient of the cement-based mixture is dependent on the amounts and ratio of water and cement that are mixed with one another to form the cement-based mixture.

Preferably the method includes laying the aggregate onto the surface prior to the step of applying the cement-based mixture to the aggregate laid on the surface to form the concrete. This means that the aggregate can be laid on the surface at any time and by any person before the cement-based mixture is applied to the aggregate laid on the surface. This is because the properties of the aggregate laid on the surface will not change over time, even in varying weather conditions. Moreover, such a method permits separate transportation of the normally heavier aggregate by a specialised vehicle that is not necessarily required to transport the lighter cement.

Optionally the aggregate is a fine or coarse aggregate. Use of a coarse aggregate permits porous concrete to be formed upon application of the cement-based mixture to the aggregate laid on the surface since gaps, through which liquids can pass, are readily formed between coarse aggregate particles.

Each aggregate particle may have a largest dimension in the range of 2 mm and 6 mm. Such an aggregate particle size is optimal for forming porous concrete with high strength.

Preferably the aggregate is or includes granite, optionally washed granite.

Granite has many material characteristics that are advantageous for forming concrete. For example, granite is solid (grades 800-1200) or highly solid (grades 1,400-1,600), is frost resistant (grades 300-400) and has a low flakiness index (5-23%). In addition radionuclide content, harmful components and additives indicators are either absent from granite or present in granite but do not exceed unsafe levels. As such, the use of granite as or in the aggregate permits formation of high-grade concrete when compared to, for example, concrete that is formed from a gravel aggregate.

The method may include the step of mixing the cement and the water to form the cement-based mixture at the locality of the surface.

Such an approach means that the resultant cement-based mixture is geographically close to the aggregate to which it is to be applied, and hence the cement-based mixture can be applied to the aggregate laid on the surface as soon as possible after it is formed. This is particularly important since the cement-based mixture will harden over time, thus making it more difficult to apply the hardening cement-based mixture to the aggregate laid on the surface. Moreover, the cement-based mixture will eventually harden to form grout which cannot be applied to the aggregate laid on the surface to form concrete.

Forming the cement-based mixture geographically close to the aggregate to which it is to be applied means that the decision on when to form the cement-based mixture can take into account factors present at the locality of the surface, such as weather conditions and workforce availability. In this way, a more informed decision can be made with regard to the timing of the formation of the cement-based mixture, thus reducing the risk of the cement and water being wasted.

In contrast, if the cement and water is mixed to form the cement-based mixture at a location that is geographically far from the aggregate laid on the surface, the aforementioned factors present at the locality of the surface may be such that it is not possible to apply the cement-based mixture to the aggregate laid on the surface after the cement-based mixture has been transported to the locality of the surface. This is because, since the cement-based mixture would already have begun to harden to form grout, the inability to apply the cement-based mixture to the aggregate laid on the surface due to factors present at the locality of the surface may lead to wastage of the cement and water that was mixed with one another to form the cement-based mixture.

In addition, if the cement, water and aggregate is mixed to form concrete at a location that is geographically far from the surface, and the aforementioned factors prevent subsequent application of the resultant concrete to the aggregate laid on the surface, the concrete would be wasted as it cannot be used once cured and hardened.

Moreover, a large amount of water is required to form concrete, typically 1 tonne of water per cubic meter of concrete, and so the costs associated with transportation of water can be significantly high. On the other hand mixing the cement and water to form the cement-based mixture at the locality of the surface can save on such transportation costs since water would normally be readily available at the location of the surface. As such, mixing the cement and water to form the cement-based mixture at the locality of the surface reduces the cost of forming the concrete compared to mixing the cement and water to form the cement-based mixture at a location geographically far from the surface.

Preferably the step of applying the cement-based mixture to the aggregate laid on the surface includes spraying the cement-based mixture onto the aggregate laid on the surface.

Spraying the cement-based mixture onto the aggregate laid on the surface means that the cement-based mixture can be applied quickly and evenly onto the aggregate laid on the surface. In contrast, if the cement, water and the aggregate is mixed to form the concrete before spraying the concrete to the surface, the tendency of the concrete to harden and cure immediately after its formation means that there is a need to spray the concrete within a short time limit before it becomes difficult to spray the hardened concrete. Moreover, since the concrete begins to harden and cure immediately after its formation, the concrete will quickly become increasingly difficult to spray evenly onto the surface.

The method may include the steps of:
providing at least one additive; and
mixing the cement, water and the or each additive to form the cement-based mixture.

Inclusion of the water in the cement-based mixture is important to provide a desirable viscosity of the resultant cement-based mixture so that it can be applied to the aggregate laid on the surface, and also so that it can interact with the aggregate to form the concrete. The viscosity of the cement-based mixture is also important for achieving an even application when it is sprayed onto the aggregate laid on the surface. The or each additive may be selected to control the viscosity of the cement-based mixture as desired. In this way, the viscosity of the cement-based mixture can be adapted to suit the requirements of the manner of application of the cement-based mixture to the aggregate laid on the surface.

The or each additive may be selected to control properties of the concrete, such as the time it takes for the resultant concrete to cure and harden, the hardness of the resultant concrete and/or the workability of the resultant concrete.

The method may include the step of mixing the cement, water and the or each additive simultaneously to form the cement-based mixture. Such simultaneous mixing simplifies the step of forming the cement-based mixture.

Optionally the step of mixing the cement, water and the or each additive to form the cement-based mixture includes:
mixing the cement and the water with one another and then mixing the or each additive with the mixed cement and water; or
mixing the cement and the or each additive with one another and then mixing the water with the mixed cement and the or each additive; or
mixing the water and the or each additive with one another and then mixing the cement with the mixed water and the or each additive.

The order in which the aforementioned materials (i.e. the cement, water and the or each additive) are mixed can be important in providing the cement-based mixture with certain properties that are required for the resultant concrete. As such, the freedom to mix the materials in any particular order provides greater flexibility when it comes to forming concrete with certain properties.

The method may include the step of mixing the cement, the water and the or each additive to form the cement-based mixture at the locality of the surface.

Moreover, by initially keeping each of the aforementioned materials separate from one another, they can then be mixed with one another in a customisable manner.

The step of providing at least one additive may include providing at least one coloured pigment.

The provision of at least one additive in the form of a coloured pigment permits formation of a coloured cement-based mixture for application to the aggregate laid on the surface to form coloured concrete.

In addition the method according to the invention permits formation of multiple batches of cement-based mixtures, each of which has a different colour and can be applied to the aggregate laid on the surface to form concrete with multiple colours. Furthermore the method according to the invention advantageously permits application of the differently coloured cement-based mixtures to the aggregate laid on the surface in any manner as desired to form concrete with a variety of coloured patterns, thus enhancing the decorativeness of the resultant concrete.

There now follows a brief description of a preferred embodiment of the invention, by way of a non-limiting example, with reference being made to the following figures in which:
Figure 1a shows schematically a method of forming porous concrete according to an embodiment of the invention;
Figure 1b shows schematically the steps of the method of Figure 1a;
Figure 2a shows schematically a step of applying a cement-based mixture to an aggregate laid on a surface;
Figure 2b shows schematically another step of applying a cement-based mixture to an aggregate laid on a surface; and
Figure 3 shows schematically a cross-sectional view of the porous concrete formed following the step of applying the cement-based mixture to the aggregate laid on the surface.

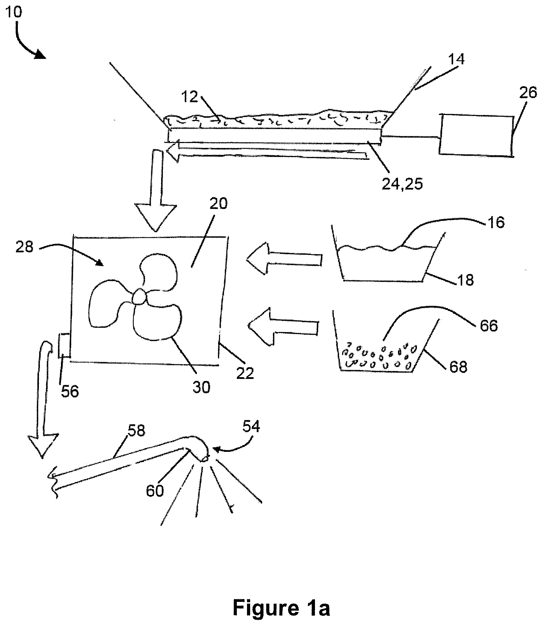

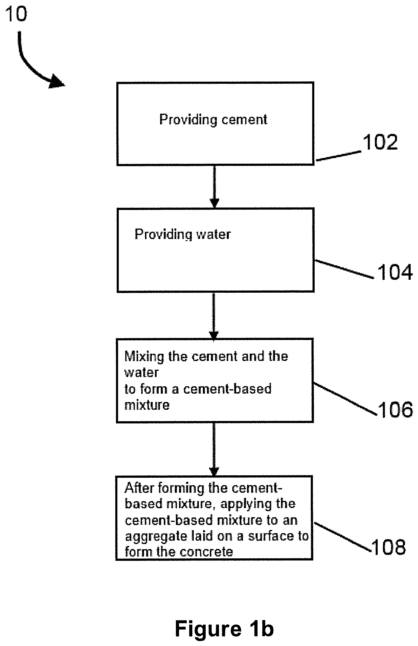

A method of forming porous concrete according to an embodiment of the invention is shown in Figures 1a and 1b, and is designated generally by reference numeral 10.

Figure 1a shows schematically the method 10 of forming porous concrete 36. At step 102 of the method 10, cement 12 is provided. At step 104 of the method 10, water 16 is provided. At step 106 of the method 10, the cement 12 and the water 16 are mixed to form a cement-based mixture 20. At step 108 of the method 10, after forming the cement-based mixture 20, the cement-based mixture 20 is applied to an aggregate 32 laid on a surface 34 to form the concrete 36.

Returning to Figure 1a, the provided cement 12 is housed within a first chamber 14, such as a hopper. Meanwhile the provided water 16 is housed within a second chamber 18, such as a tank.

The cement 12 is fed into a mixing chamber 22 by a drive 24, in this case an auger 25, whilst the water 16 is pumped into the mixing chamber 22 by a pump (not shown). The auger 25 is controlled by a motor 26 which rotates the auger 25 to drive the cement 12 towards one end of the first chamber 14 and into the mixing chamber 22.

The cement 12 and water 16 are mixed in the mixing chamber 22 by a mixing apparatus 28. The mixing apparatus 28 includes a mixing blade 30 and a motor (not shown) which controls the mixing blade 30. The motor can control the rotational speed of the mixing apparatus 28 and/or the orientation of the mixing blade 30. The mixing apparatus 28 may instead be controlled manually by a handle, for example.

The mixing apparatus 28 may include more than one mixing blade 30. Each mixing blade 30 may be located at the bottom of the mixing chamber 22 or at the top of the mixing chamber 22. In other embodiments, at least one mixing blade 30 may be located at the top of the mixing chamber 22 and at least one other mixing blade 30 may be located at the bottom of the mixing chamber 22.

The first and second chambers 14,18, the mixing chamber 22, auger 25, motor 26 and mixing apparatus 28 may all form part of a specially adapted vehicle (not shown). Therefore, a single vehicle can be used to transport the cement and water 16, as well as mix the cement and water 16 to form the cement-based mixture 20. In other embodiments of the invention, one or more of the first and second chambers 14,18, the mixing chamber 22, auger 25, motor 26 and mixing apparatus 28 may not form part of the specially adapted vehicle. For example, the second chamber 18 may not be required to form part of the specially adapted vehicle since the water 16 may instead be provided by a water source at the location of the surface 34.

After forming the cement-based mixture 20, the cement-based mixture 20 is applied to an aggregate 32 laid on a surface 34 to form concrete 36.

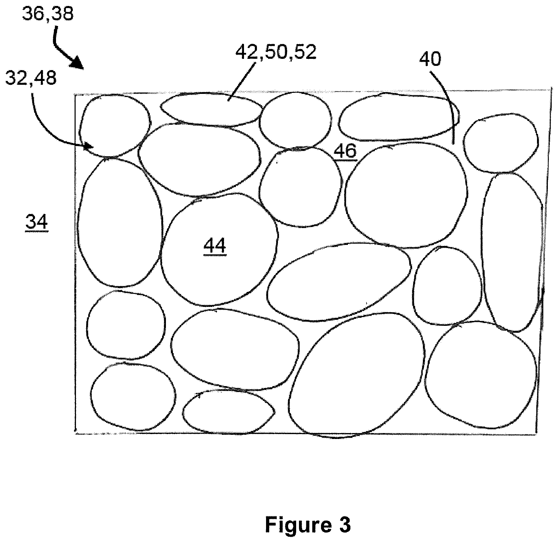

As shown in Figure 3, the cement-based mixture 20, once applied to the aggregate 32, forms concrete 36. The concrete will then begin to cure and harden on the surface 34 immediately after its formation.

In this regard, the cement-based mixture 20 has a surface tension coefficient that permits suspension of the cement-based mixture 20 on, around, through and/or over the aggregate 32 so as to enable even formation of the concrete 36.

The aggregate 32 is laid onto the surface 34 prior to the step of applying the cement-based mixture 20 to the aggregate 32 laid on the surface 34 to form concrete 36. The aggregate 32 can be laid onto the surface 34 at any time (e.g. hours, days or weeks) before the cement-based mixture 20 is applied to the aggregate 32 laid on the surface 34.

The aggregate 32 can also be laid at any time before the mixing of the cement 12 and the water 16 to form the cement-based mixture 20. In this way, the aggregate 32 can be transported separately from the cement 12 and water 16 and by a vehicle that is different from the specially adapted vehicle that transports the cement 12 and water 16. For example, the aggregate 32 can be transported by a lorry which is capable of carrying heavy loads, whilst the specially adapted vehicle that carries and mixes the cement 12 and the water 16 does not need to be capable of carrying such heavy loads.

In the embodiment shown in Figure 3, the concrete 36 is porous 38. Porous concrete 38 allows liquids, such as water, to pass directly therethrough. Porous concrete 38 is typically used for light traffic areas, greenhouses, driveways, paths or walkways, sports pitches, pavements and in housing for drainage and storm management.

The porous concrete 38 shown in Figure 3 includes gaps 40 that are formed between aggregate particles 42. The gaps 40 permit the cement-based mixture 20 to pass therethrough. The cement-based mixture 20 forms nonporous concrete portions 44, where it interacts with the aggregate particles 42 to form concrete, and porous portions 46, where it passed through the gaps 40 between the aggregate particles 42. In this manner the cement-based mixture 20 binds the aggregate particles 42 together whilst allowing liquids to pass through the porous portions 46 formed between the aggregate particles 42.

Moreover the porous concrete 38 is formed by providing a coarse aggregate 48. In particular, coarse aggregate particles 50 of the coarse aggregate 48 each have a largest dimension of between 2 mm and 6 mm. Such dimensions of the aggregate particles 50 enables formation of porous concrete 38 with high strength.

In other embodiments of the invention, the porous concrete 38 may be formed from an aggregate that contains a combination of both coarse aggregate particles and fine aggregate particles (not shown). The combination of coarse and fine aggregate particles means that the cement-based mixture forms more nonporous concrete portions, i.e. where the cement-based mixture interacts with the coarse and fine aggregate particles to form concrete, and less porous portions, i.e. where the cement-based mixture passed through the gaps formed between the aggregate particles, than that of the porous concrete formed with coarse aggregate particles only. In this way, the porosity of the concrete can be controlled by the ratio of coarse to fine aggregate particles.

In addition to the foregoing, the aggregate 32 includes granite aggregate particles 52. In this embodiment the granite aggregate particles 52 are washed granite aggregate particles 52.

In other embodiments of the invention (not shown) the granite aggregate particles may be unwashed granite aggregate particles. Moreover, the aggregate may include a mixture of different grades of granite aggregate particles, such as grades 800-1,200 or grades 1,400-1,600, or grades 300-400, depending on the requirements of the aggregate.

The aggregate particles 42 may instead be made from another material, such as gravel or crushed stone.

In an example (not shown) not forming part of the claimed invention, the concrete may instead be nonporous, i.e. concrete that does not permit liquids to pass therethrough. More particularly, the nonporous concrete may be made by using a fine aggregate only, such a sand. The use of a fine aggregate means that virtually no gaps are formed between the aggregate such that the cement-based mixture 20 forms nonporous concrete portions where it interacts with the aggregate to form concrete, and very few or no porous portions.

The step of mixing the cement 12 and the water 16 to form the cement-based mixture 20 is carried out at the locality of the surface 34. Therefore the local weather conditions, workforce availability and/or condition of the aggregate 32 laid on the surface 34 can be first investigated prior to carrying out the aforementioned mixing step at the locality of the surface 34. Moreover, the cement-based mixture 20 can be applied to the aggregate 32 laid on the surface 34 shortly after the cement 12 and water 16 has been mixed to form the cement-based mixture 20, since the mixing of the cement 12 and the water 16 to form the cement-based mixture 20 is carried out geographically close to the aggregate 32 laid on the surface 34.

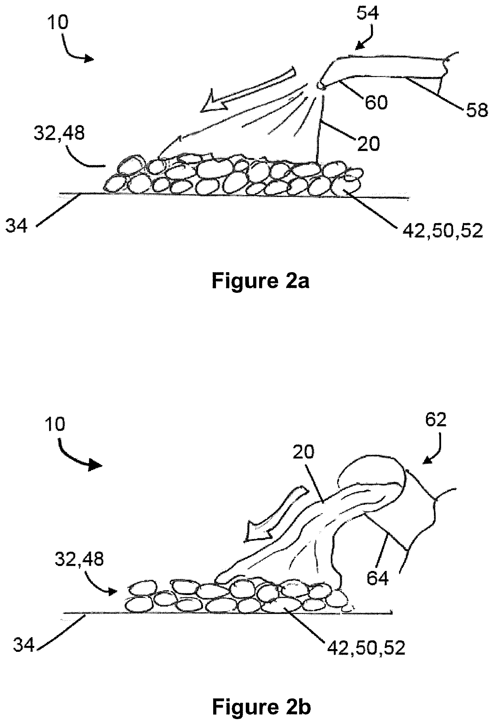

As shown in Figures 1a and 2a, the cement-based mixture 20 is applied to the aggregate 32 laid on the surface 34 by spraying 54 the cement-based mixture 20 onto the aggregate 32 laid on the surface 34.

The cement-based mixture 20 is pumped from the mixing chamber 22 to an exit channel 56 and through a hose (not shown). The hose includes a lance 58 with a nozzle 60 at one end thereof to direct the cement-based mixture 20 towards a desired location on the aggregate 32 laid on the surface 34. An operator can control the direction of the nozzle 60, whilst a second operator can monitor the pumping of the cement-based mixture 20.

Alternatively, as shown in Figure 2b, the cement-based mixture 20 may be applied to the aggregate 32 laid on the surface 34 by simply pouring 62 the cement-based mixture 20 onto the aggregate 32 laid on the surface 34. Such pouring 62 may be carried out manually by decanting the cement-based mixture 20 into a portable chamber 64, such as a bucket, before pouring the cement-based mixture 20 from the portable chamber 64 onto the aggregate 32 laid on the surface 34. The pouring 62 may be carried out automatically by the mixing chamber 22 being controlled to pivot and/or translate over the aggregate 32 laid on the surface 34 so as to pour the cement-based mixture 20 from the mixing chamber 22 onto the aggregate 32 laid on the surface 34.

Returning to Figure 1a, the method of forming concrete 10 also includes the step of providing at least one additive 66 and mixing the cement 12, water 16 and the or each additive 66 to form the cement-based mixture 20.

The additive 66 may be Sika^{®} Rapid-1^{®} which is a hardening accelerator that increases the early strength of concrete without affecting the initial workability of the concrete. Another example of an additive 66 that may be used is Sika^{®} Rapid-2^{®} which is a liquid set accelerator. A further still example of an additive 66 that may be used is Sika^{®} Retarder^{®} which controls the hydration of the cement 12 in the cement-based mixture 20 and stabilises the resultant concrete 10 so as to control the curing of the concrete 10.

In this embodiment, the additive 66 is stored in a third chamber 68, such as a plastic container. The additive 66 is pumped into the mixing chamber 22 by a pump (not shown). Such pumping of the additive 66 into the mixing chamber 22 is carried out simultaneously with the driving of the cement 12 into the mixing chamber 22 and the pumping of the water 16 into the mixing chamber 22. Alternatively, the cement 12, water 16 and the additive 66 may be pumped/driven into the mixing chamber 22 in any order.

In other embodiments of the invention, the cement 12 and the water 16 may be mixed with one another first, and then the additive 66 may be mixed with the mixed cement 12 and water 16. Alternatively, the cement 12 and the additive 66 may be mixed with one another first, and then the water 16 may be mixed with the mixed cement 12 and the additive 66. In other embodiments of the invention, the water 16 and the additive 66 may be mixed with one another first, and then the cement 12 may be mixed with the mixed water 16 and the or each additive 66.

In any event, the mixing of the cement 12, the water 16 and the additive 66 to form the cement-based mixture 20 is carried out at the locality of the surface 34.

An exemplary implementation of the method 10 of Figures 1a and 1b is described as follows.

A lorry that is capable of carrying heavy loads delivers the aggregate 32 to a specific location, and the aggregate 32 is laid onto the desired surface 34 at the specific location.

The same or another lorry or vehicle also delivers cement 12, which may be stored in a bag, to the same location. At any time after the aggregate 32 is laid onto the surface 34 and the cement 12 is delivered to the location, for example a week later, the specially adapted vehicle is driven to the same location.

The specially adapted vehicle includes the first, second and third chambers 14, 18, 68. The second chamber 18 contains the water 16 and the third chamber 68 contains the additive 66.

Once the specially adapted vehicle arrives at the location, an operator carries out an inspection of the location so as to help him make a decision as to whether to carry on with the method of forming concrete 36. Such inspection may include inspection of the condition and/or position of the aggregate 32 laid on the surface 34 and the current weather conditions.

If the operator decides that factors present at the location (such as poor weather conditions) warrants a delay in formation of the concrete 36 on the surface 34, the method 10 can be halted for the time being without there being any waste of cement, water, additives or concrete.

If the operator is satisfied that the conditions at the location is suitable for formation of the concrete 36 on the surface 34, then the next steps of the method 10 are carried out.

The operator feeds the cement 12 into the first chamber 14. Alternatively, the first chamber 12 may already contain the cement 12 before the specially adapted vehicle is driven to the location. The cement 12 may instead be transported by a trailer attached to the specially adapted vehicle.

The operator then switches on the motor 26 which rotates the auger 25 located at the bottom of the first chamber 14. The auger 25 drives the cement 12 in the first chamber 14 to one end thereof and into the mixing chamber 22. At the same time, the operator switches on first and second pumps (not shown). The first pump pumps the water 16 from the second chamber 18 into the mixing chamber 22, and the second pump pumps the additive 66 from the third chamber 68 into the mixing chamber 22.

In other embodiments of the invention (not shown) the specially adapted vehicle may omit the second chamber 18, and instead the water 16 may be provided from a water source at the location of the surface 34, for example a tap or pump.

Next, the operator switches on a third motor (not shown) which rotates the mixing blade 30 so as to mix the materials 12, 16, 66 entering the mixing chamber 22 to form the cement-based mixture 20.

If at this point the weather conditions at the location become unsuitable for formation of the concrete 36, the operator can cease operation of each motor and pump so as to stop the materials 12, 16, 66 from entering the mixing chamber 22. The materials 12, 16, 66 remaining in the first, second and third chambers 14,18, 68 are unmixed, and so can be used at a later date.

Any cement-based mixture 20 that has already been formed at this stage will immediately begin to harden to form grout. However, if the weather conditions change relatively quickly, e.g. within twenty minutes, to become suitable for formation of concrete 36, then the already formed cement-based mixture 20 can still be used. In any event the aggregate 32 laid on the surface 34 is unaffected since it has not yet been mixed with the cement-based mixture 20 to form the concrete 36, and so the aggregate 23 is not wasted and thereby remains reusable.

When the weather conditions are suitable for formation of the concrete 36, the operator holds the lance 58 and directs its nozzle 60 towards the aggregate 32 laid on the surface 34. The operator then switches on a pump (not shown) which pumps the cement-based mixture 20 through the nozzle 60 of the lance 58 via the hose so as to spray 54 the cement-based mixture 20 onto the aggregate 32 laid on the surface 34.

A switch (not shown) may be located on the lance 58 itself to initiate and cease pumping of the cement-based mixture 20 through the hose as desired, do that a single operator can spray 54 the cement-based mixture 20 onto the aggregate 32 laid on the surface 34. However, it is preferred that two operators carry out the method 10 of forming concrete 36 so that one operator can oversee the mixing of the materials 12, 16, 66 to form the cement-based mixture 20 and that the other operator can concentrate on spraying 54 the cement-based mixture 20 onto the aggregate 32 laid on the surface 34.

Once the desired amount of cement-based mixture 20 has been applied to the aggregate 32 laid on the surface 34, concrete 36 is formed. The newly formed concrete 36 is then left to cure and harden. If a coarse aggregate 48 is used, for example one which is or includes granite aggregate particles 52, then porous concrete 38 is formed as shown in Figure 3. Normally, the concrete 36 is sufficiently hardened within 24 hours to accommodate pedestrians walking over it.

After the concrete 36 is formed, the operator can refill the second chamber 18 with water 16 using a water source (e.g. a tap or pump) at the location of the surface 34. Therefore the specially adapted vehicle can then transport the water 16 and cement 12 to a new location so as to form concrete 36 at the new location. In this way, the specially adapted vehicle does not have to be designed to be capable of carrying enough water 16 to carry out several jobs, thus further reducing transportation costs.

It will be appreciated that the additive 66 may be in the form of a coloured pigment, or in the case of multiple additives, different coloured pigments.

The provision of at least one additive in the form of a coloured pigment permits formation of a coloured cement-based mixture 20 for application to the aggregate 32 laid on the surface 34 to form coloured concrete 36.

In addition the method of Figures 1a and 1b permits formation of multiple batches of cement-based mixtures 20, each of which has a different colour and can be applied to the aggregate 32 laid on the surface 34 to form concrete 36 with multiple colours. Furthermore the method of Figures 1a and 1b advantageously permits application of the differently coloured cement-based mixtures 20 to the aggregate 32 laid on the surface 34 in any manner as desired to form concrete 36 with a variety of coloured patterns, thus enhancing the decorativeness of the resultant concrete 36.

## Claims

1. A method (10) of forming porous concrete (36,38), the method comprising the steps of:
i) providing cement (12);
ii) providing water (16);
iii) mixing the cement (12) and the water (16) to form a cement-based mixture (20) free of aggregate;
iv) after forming the cement-based mixture (20), applying the cement-based mixture (20) to an aggregate (32) laid on a surface (34) to form the porous concrete (36,38),
wherein the aggregate (32) includes aggregate particles (42), and
wherein the cement-based mixture (20) has a surface tension coefficient that permits suspension of the cement-based mixture (20) on, around, through and/or over the aggregate (32) to form the porous concrete (36,38) by interacting with the aggregate particles (42,50,52) to form nonporous concrete portions (44) and by passing through gaps (40) between the aggregate particles (42,50,52) to form porous portions (46).

2. A method (10) according to any preceding claim further including the step of laying the aggregate (32) onto the surface (34) prior to the step of applying the cement-based mixture (20) to the aggregate (32) laid on the surface (34) to form the porous concrete (36,38).

3. A method (10) according to any preceding claim wherein the aggregate (32) is a fine or coarse aggregate (48).

4. A method (10) according to any preceding claim wherein each aggregate particle (42,50,52) has a largest dimension in the range of 2 mm and 6 mm.

5. A method (10) according to any preceding claim wherein the aggregate (32) is or includes granite, optionally washed granite.

6. A method (10) according to any preceding claim including the step of mixing the cement (12) and the water (16) to form the cement-based mixture (20) at the locality of the surface (34).

7. A method (10) according to any preceding claim wherein the step of applying the cement-based mixture (20) to the aggregate (32) laid on the surface (34) includes spraying (54) the cement-based mixture (20) onto the aggregate (32) laid on the surface (34).

8. A method (10) according to any preceding claim further including the steps of:
providing at least one additive (68); and
mixing the cement (12), water (16) and the or each additive (68) to form the cement-based mixture (20).

9. A method (10) according to Claim 8 including the step of mixing the cement (12), water (16) and the or each additive (68) simultaneously to form the cement-based mixture (20).

10. A method (10) according to Claim 8 wherein the step of mixing the cement (12), water (16) and the or each additive (68) to form the cement-based mixture (20) includes:
mixing the cement (12) and the water (16) with one another and then mixing the or each additive (68) with the mixed cement (12) and water (16); or
mixing the cement (12) and the or each additive (68) with one another and then mixing the water (16) with the mixed cement (12) and the or each additive (68); or
mixing the water (16) and the or each additive (68) with one another and then mixing the cement (12) with the mixed water (16) and the or each additive (68).

11. A method (10) according to any one of Claims 8 to 10 further including the step of mixing the cement (12), the water (16) and the or each additive (68) to form the cement-based mixture (20) at the locality of the surface.

12. A method (10) according to any one of Claims 8 to 10 wherein the step of providing at least one additive includes providing at least one coloured pigment.

## Patentansprüche

1. Verfahren (10) zum Bilden von porösem Beton (36, 38), wobei das Verfahren die folgenden Schritte umfasst:
i) Bereitstellen von Zement (12);
ii) Bereitstellen von Wasser (16);
iii) Mischen des Zements (12) und des Wassers (16), um eine Mischung (20) auf Zementbasis zu bilden, die frei von Zuschlagstoffen ist;
iv) nach dem Bilden der zementbasierten Mischung (20), Aufbringen der zementbasierten Mischung (20) auf einen Zuschlagstoff (32), der auf einer Oberfläche (34) angeordnet ist, um den porösen Beton (36, 38) zu bilden,
wobei der Zuschlagstoff (32) Zuschlagstoffpartikel (42) enthält, und
wobei die zementbasierte Mischung (20) einen Oberflächenspannungskoeffizienten aufweist, der eine Suspendierung der zementbasierten Mischung (20) auf, um, durch und/oder über dem Zuschlagstoff (32) ermöglicht, um den porösen Beton (36,38) zu bilden, indem sie mit den Zuschlagstoffpartikeln (42,50,52) zusammenwirken, um nicht poröse Betonabschnitte (44) zu bilden, und indem sie durch Lücken (40) zwischen den Zuschlagstoffpartikeln (42,50,52) geführt werden, um poröse Abschnitte (46) zu bilden.

2. Verfahren (10) nach einem der vorhergehenden Ansprüche, ferner umfassend den Schritt des Aufbringens des Zuschlagstoffs (32) auf die Oberfläche (34) vor dem Schritt des Aufbringens der Mischung (20) auf Zementbasis auf den auf der Oberfläche (34) aufgebrachten Zuschlagstoff (32), um den porösen Beton (36,38) zu bilden.

3. Verfahren (10) nach einem der vorhergehenden Ansprüche, wobei der Zuschlagstoff (32) ein feiner oder grober Zuschlagstoff (48) ist.

4. Verfahren (10) nach einem der vorhergehenden Ansprüche, wobei jede Zuschlagstoffpartikel (42, 50, 52) eine größte Abmessung im Bereich von 2 mm und 6 mm hat.

5. Verfahren (10) nach einem der vorhergehenden Ansprüche, wobei der Zuschlagstoff (32) Granit, wahlweise gewaschener Granit, ist oder enthält.

6. Verfahren (10) nach einem der vorhergehenden Ansprüche, umfassend den Schritt des Mischens des Zements (12) und des Wassers (16), um die Mischung (20) auf Zementbasis an der Stelle der Oberfläche (34) zu bilden.

7. Verfahren (10) nach einem der vorhergehenden Ansprüche, wobei der Schritt des Aufbringens der Mischung (20) auf Zementbasis auf den auf der Oberfläche (34) aufgebrachten Zuschlagstoff (32) Sprühen (54) der zementbasierten Mischung (20) auf den auf der Oberfläche (34) abgelegten Zuschlagstoff (32) umfasst.

8. Verfahren (10) nach einem der vorhergehenden Ansprüche, das ferner die folgenden Schritte umfasst:
Bereitstellen mindestens eines Additivs (68); und
Mischen des Zements (12), Wasser (16) und des oder jedes Additivs (68), um die Mischung (20) auf Zementbasis zu bilden.

9. Verfahren (10) nach Anspruch 8, umfassend den Schritt des gleichzeitigen Mischens des Zements (12), des Wassers (16) und des oder jedes Additivs (68), um die Mischung (20) auf Zementbasis zu bilden.

10. Verfahren (10) nach Anspruch 8, wobei der Schritt des Mischens des Zements (12), des Wassers (16) und des oder jedes Additivs (68) zum Bilden der Mischung (20) auf Zementbasis Folgendes umfasst:
Mischen des Zements (12) und des Wassers (16) miteinander und dann Mischen des oder jedes Additivs (68) mit dem gemischten Zement (12) und Wasser (16); oder
Mischen des Zements (12) und des oder jedes Additivs (68) miteinander und dann
Mischen des Wassers (16) mit dem gemischten Zement (12) und dem oder jedem Additiv (68); oder
Mischen des Wassers (16) und des oder jedes Additivs (68) miteinander und dann
Mischen des Zements (12) mit dem gemischten Wasser (16) und dem oder jedem Additiv (68).

11. Verfahren (10) nach einem der Ansprüche 8 bis 10, ferner umfassend den folgenden Schritt
Mischen des Zements (12), des Wassers (16) und des oder jedes Additivs (68), um die zementbasierte Mischung (20) an der Stelle der Oberfläche zu bilden.

12. Verfahren (10) nach einem der Ansprüche 8 bis 10, wobei der Schritt des Bereitstellens mindestens eines Additivs das Bereitstellen mindestens eines Farbpigments umfasst.

## Revendications

1. Procédé (10) de formation de béton poreux (36, 38), le procédé comprenant les étapes :
i) de fourniture de ciment (12) ;
ii) de fourniture d'eau (16) ;
iii) de mélange du ciment (12) et de l'eau (16) pour former un mélange à base de ciment (20) exempt d'agrégats ;
iv) après la formation du mélange à base de ciment (20), d'application du mélange à base de ciment (20) sur un agrégat (32) posé sur une surface (34) pour former le béton poreux (36, 38), dans lequel l'agrégat (32) comporte des particules d'agrégat (42), et
dans lequel le mélange à base de ciment (20) a un coefficient de tension superficielle qui permet la suspension du mélange à base de ciment (20) sur, autour, à travers et/ou au-dessus de l'agrégat (32) pour former le béton poreux (36, 38) en interagissant avec les particules d'agrégat (42, 50, 52) pour former des parties de béton non poreuses (44) et en passant à travers des espaces (40) entre les particules d'agrégat (42, 50, 52) pour former des parties poreuses (46).

2. Procédé (10) selon une quelconque revendication précédente, comportant en outre l'étape de pose de l'agrégat (32) sur la surface (34) avant l'étape d'application du mélange à base de ciment (20) sur l'agrégat (32) posé sur la surface (34) pour former le béton poreux (36, 38).

3. Procédé (10) selon une quelconque revendication précédente, dans lequel l'agrégat (32) est un agrégat fin ou grossier (48).

4. Procédé (10) selon une quelconque revendication précédente dans lequel chaque particule d'agrégat (42, 50, 52) a une plus grande dimension, dans la plage de 2 mm à 6 mm.

5. Procédé (10) selon une quelconque revendication précédente, dans lequel l'agrégat (32) est ou comporte du granit, éventuellement du granit lavé.

6. Procédé (10) selon une quelconque revendication précédente, comportant l'étape de mélange du ciment (12) et de l'eau (16) pour former le mélange à base de ciment (20) à l'emplacement de la surface (34).

7. Procédé (10) selon une quelconque revendication précédente, dans lequel l'étape d'application du mélange à base de ciment (20) sur l'agrégat (32) posé sur la surface (34) comporte la pulvérisation (54) du mélange à base de ciment (20) sur l'agrégat (32) posé sur la surface (34) .

8. Procédé (10) selon une quelconque revendication précédente comportant en outre les étapes de :
fourniture d'au moins un additif (68) ; et
mélange du ciment (12), de l'eau (16) et de l'additif ou de chaque additif (68) pour former le mélange à base de ciment (20).

9. Procédé (10) selon la revendication 8, comportant l'étape de mélange du ciment (12), de l'eau (16) et de l'additif ou de chaque additif (68) pour former simultanément le mélange à base de ciment (20).

10. Procédé (10) selon la revendication 8, dans lequel l'étape de mélange du ciment (12), de l'eau (16) et de l'additif ou de chaque additif (68) pour former le mélange à base de ciment (20), comporte :
le mélange du ciment (12) et de l'eau (16) l'un avec l'autre puis le mélange de l'additif ou de chaque additif (68) avec le ciment mélangé (12) et l'eau (16) ; ou
le mélange du ciment (12) et de l'additif ou de chaque additif (68) l'un avec l'autre puis le mélange de l'eau (16) avec le ciment mélangé (12) et l'additif ou chaque additif (68) ; ou
le mélange de l'eau (16) et de l'additif ou de chaque additif (68) l'un avec l'autre puis le mélange du ciment (12) avec l'eau mélangée (16) et l'additif ou chaque additif (68).

11. Procédé (10) selon l'une quelconque des revendications 8 à 10, comportant en outre l'étape de mélange du ciment (12), de l'eau (16) et de l'additif ou de chaque additif (68) pour former le mélange à base de ciment (20) à l'emplacement de la surface.

12. Procédé (10) selon l'une quelconque des revendications 8 à 10, dans lequel l'étape de fourniture d'au moins un additif comporte la fourniture d'au moins un pigment coloré.
